# EUROPEAN PATENT APPLICATION

(11) **EP 2 737 873 A1**
(43) Date of publication of application: **04.06.2014**
(21) Application number: 12194805.3
(22) Date of filing: 29.11.2012
(51) Int. Cl.: A61C 13/00

(54) **Method of making a dental restoration and system therefore**

(71) Applicant: 3M Innovative Properties Company, Saint Paul, MN 55133-3427 (US)
(72) Inventor: The designation of the inventor has not yet been filed
(74) Representative: Hohmann, Arno

(57) **Abstract**

A method of making a dental restoration comprises steps of transmitting from a scanning device scan data to a central processing unit and receiving on a Computer Numerical Control (CNC) device machine control data for manufacturing a dental restoration from the central processing unit. The machine control data are associated with the scan data. Further the scanning device and the CNC device are at the same first location, whereas the central processing unit is at a different second location remote from the first. The method further comprises steps of providing a dental blank and shaping the dental blank based on the machine control data to provide the dental restoration. The method and a system for performing the method help maximizing the timely efficiency in a restoration of a tooth and helps maximizing the quality of a chairside manufactured dental restoration.

## Description

### Field of the Invention

The invention relates to a method of making a dental restoration, and in particular to a method in which scan data are transmitted from a first location to a second location, wherein machine control data are received at the first location from the second or a third location. Further the invention relates to a system which is adapted to perform the method of the invention.

### Background Art

In dentistry pre-manufactured prostheses or restorations for replacing or reconstructing teeth, for example dental crowns, bridges, abutments or inlays, are more and more produced by use of automated processes. Typically such dental restorations have to be made at a relatively high dimensional precision to appropriately fit into a patient's dentition which is prepared to receive a particular dental restoration. Further in addition to dimensional requirements dental restorations often have to meet high aesthetic expectations of patients and dental practitioners.

Although dimensional and aesthetic requirements can be fulfilled by preparation of the dental restorations by manual and automatic processes in dental laboratories, there is a demand for automatic manufacturing of dental restorations "chairside", meaning directly in a dentist's practice without physically obtaining the restoration from a dental lab. Many dentists appreciate the advantage of minimizing any sending of physical parts, like dental impressions, plaster models and/or dental restorations, between a dental lab and the dentist's practice due to time savings. There are also concepts for restoring teeth by use of dental restorations in a single appointment of a patient at the dentist.

For example US 2006/0172261 A1 discloses a system and method to fabricate a dental prosthetic that fits a restoration site in a patient's mouth in a single appointment without requiring the dentist to design the dental prosthetic. The system at the dentist's office includes an acquisition unit, a milling unit, and a communication interface. The acquisition unit obtains image data of the restoration site while the patient is present in the dentist office. The communication interface sends the restoration site image data to a design center that is selectively coupled to a plurality of dentist offices. The restoration site image data is used at the design center by qualified personnel to design a prosthetic that corresponds to the imaged restoration site. Milling instructions are generated at the design center and sent to the communication interface at the dentist office. The milling unit executes the milling instructions to fabricate the dental prosthetic. In this manner, a patient may have a dental prosthetic designed, fabricated, and fitted in a single appointment without requiring the dentist to design dental prosthetic.

For chairside preparation of dental restorations glass ceramic materials have been widely used for achieving good physical, aesthetic and biological properties. However the necessary precision of the dental restoration depends on the design of the restoration and there is still a demand for maximizing the precision of such design. Because often design capabilities are limited or unavailable in a dentist's practice there are concepts in which the design is outsourced to a dental lab, as for example suggested in the above mentioned US 2006/0172261 A1.

Although a variety of solutions for chairside manufacturing of dental restorations exist there is still a need for a system which allows a time and cost efficient workflow and which can be used with different types of equipment in a dentist's practice and various design sources.

### Summary of the Invention

In one aspect the invention relates to a method of making a dental restoration. The method comprises the steps of:
(a) Transmitting from a scanning device, in particular from an intra-oral scanning device, scan data representing at least part of a patient's dentition to a central processing unit. The scanning device is located at a first location and the central processing unit is located at a second location which is remote from the first location.
(b) Receiving on a Computer Numerical Control (CNC) device machine control data for manufacturing a dental restoration. The CNC device is also located at the first location and receives the machine control data from the second location, preferably from the central processing unit. Alternatively the CNC device receives the machine control data from a third location which is remote from the first location and the second location. The machine control data received by the CNC device is associated with the scan data and in a format suitable for processing by the CNC device.
(c) Providing a dental blank, and
(d) shaping the dental blank based on the machine control data, and thereby providing the dental restoration.

Preferably step (a) does not include any intra-oral scanning action as such. Further the step (a) may be restricted to only transmitting from the intra-oral scanning device scan data representing at least part of a patient's dentition to a central processing unit.

The invention is advantageous because it allows the use of a scanning device and a CNC device in a dentist's practice independent from each other and thus helps reducing idle times of one of the devices due to unavailability of the respective other device. Therefore the invention also helps maximizing time efficiency in a dental practice. Further the invention allows for using a variety of different data formats for the operation of the scanning device and the CNC device. Thus the invention helps minimizing the requirements for compatibility for particular data formats. Further the invention generally helps minimizing the time for preparation of the restoration of a patient's tooth or teeth, and preferably allows for a tooth restoration within a single appointment with the dentist.

Preferably the first location refers to a dentist's practice at which the scanning device and the CNC device are located. Further the scanning device as well as the CNC device each are preferably self-contained devices. The scanning device is therefore preferably adapted for transmitting scan data without co-operation with the CNC device, and the CNC device is preferably adapted from receiving machine control data without co-operation of the scanning data. The term "co-operation" for the purpose of the present specification however does not refer to an association or dependency of data. For example the machine control data may be based on the scan data and therefore these data may be associated to each other. In particular at the time the machine control data are received at the CNC device an operation of the scanning device is not required and at the time the scan data are transmitted from the scanning device operation of the CNC device is not required.

In one embodiment the steps (a) to (d) are performed within a time period of less than eight hours, preferably less than one hour. This allows for a preparation of the dental restoration and an insertion of the restoration within a single appointment of a patient with a dentist.

In a further embodiment the dental restoration is made of a single piece from a single blank. Such a blank is preferably made of a Resin Nano Ceramic (RNC) which is a mixture of composite and ceramic. Such a material is available under the designation 3M™ ESPE™ Lava™ Ultimate CAD/CAM Restorative for CEREC^{®} from the company 3M Deutschland GmbH, Germany. Such a material typically exhibits properties of a composite (generally not brittle and largely fracture resistant), and properties of a ceramic (excellent polish retention for lasting aesthetics).

In a further embodiment the CNC device is adapted for cutting with a geometrically determined cutting edge (further referred to as cutting herein). The step (d) is preferably performed essentially without liquid cooling and essentially without grinding (cutting edge not determined). Thus the generation of dust during cutting or contamination from a cooling agent may be minimized. Further a relatively inexpensive CNC device which is not necessarily prepared for liquid cooling, and relatively inexpensive cutting tools may be used.

In one embodiment the method further comprises the steps of indicating receipt of machine control data to a user at the first location, and initiating the shaping of the dental blank upon user input. For example the CNC device may indicate a successful download on machine control data received from the central processing unit in a memory of the CNC device. Such indication may be preformed visually, for example by a signal light, audibly, for example by a signal tone, or a combination thereof. The CNC device may further have a start button for initiating the manufacturing of the restoration by the CNC device.

In an embodiment the method further comprises the step of converting the scan data into first Computer Aided Design (CAD) data. The conversion is preferably performed by the central processing unit at the second location. The skilled person will however recognize that a data conversion may be performed by other means at the second location. The method further may comprise the step of transmitting the first CAD data to the third location. Further the method may comprise the step of receiving the first CAD data at the third location. The third location preferably comprises a dental Computer Aided Design (CAD) device and operator based design capability. Accordingly the first CAD data are preferably received by the CAD device. The method may still further comprise the step of designing the dental restoration based on the first CAD data and thereby providing second CAD data. The design is preferably performed on the CAD device and preferably at the third location.

In one embodiment the method comprises in one alternative the step of converting the second CAD data into machine control data at the third location and transmitting the machine control data to the second location. For example the second CAD data may be converted by the CAD device or an integrated or separate conversion unit present at the third location. The converted data (the machine control data) may be transmitted to the central processing unit at the second location. In another alternative of this embodiment the method comprises the step of transmitting the second CAD data to the second location and converting the second CAD data into machine control data at the second location. For example the second CAD data may be first transmitted to the central processing unit and may be converted at the second location by the central processing unit or by other appropriate means at the second location. The method may further comprise the step of transmitting the machine control data to the first location. For example the machine control data may be directly transmitted from the third location to the first location, in particular from the CAD device or conversion unit to the CNC device.

In a further embodiment the method comprises the step of uploading the scan data to a case manager, preferably provided in the form of software, in the central processing unit at the second location. The upload is preferably initiated by the scanning device. Thus a communication between the scanning device and the central processing unit may only be established upon demand, for example initiated by the scanning device at the first location. Therefore an active monitoring of the scanning device for determining of whether data are present by the central processing unit preferably is avoided. This is advantageous in that the volume of data traffic between the scanning unit and the central processing unit can be minimized. The method may further comprise the step of downloading the first CAD data by the CAD device at the third location. The download is preferably initiated by the CAD device, so that again a data communication is established only on demand. Further the method may comprise the step of uploading the second CAD data to the case manager at the second location (for example initiated by the CAD device or the data conversion unit at the third location), and the step of uploading the machine control data to the CNC device at the first location (for example initiated by the central processing unit at the second location). Thus in the method of the invention data are generally transmitted and/or received upon demand and any regular monitoring may be avoided. The step of uploading the machine control data to the CNC device may be preceded by steps of indicating availability of machine control data at the central processing unit to the CNC device, and user activating the upload.

In a further embodiment the scan data is directly transmitted from the scanning device at the first location to the central processing unit. Further the machine control data is preferably directly received by the CNC device from the third location. The skilled person will understand that the terms "directly transmitted" and "directly received" can include data communication via intermediate servers which however are only involved in operating the data communication as such, for example which simply forward information.

In a further aspect the invention relates to a system for making a dental restoration. The system is preferably adapted to perform the method of the invention. In particular the system comprises:
- at a first location a scanning device, which is configured for transmitting scan data to a central processing unit located at a second location which is remote from the first location;
- at the first location a Computer Numeric Control (CNC) device which is configured for receiving machine control data from the central processing unit or from a third location which is located remote from the first location and the second location;
- wherein the CNC device is adapted to buffer and to indicate receipt of the machine control data; and
- wherein the CNC device is adapted to shape a dental blank based on the machine control data, and thereby providing the dental restoration.

In one embodiment the scanning device and the CNC device are not adapted for direct data communication with each other. For example the scanning device and the CNC device may not use compatible data formats for communicating with each other.

In a further embodiment the CNC device is adapted to initiate shaping of the dental blank after receipt of machine control data upon user input. For example the CNC device may have a signal light and a start button, and a user may be informed about the receipt of machine control data by the signal light. The user may then press the start button to initiate the manufacturing of the dental restoration.

In a further embodiment the system comprises one or a plurality of dental blanks for making one or more dental restorations. The blanks may have a different coloring to resemble different tooth shades. In one example the system comprises a set of blanks comprising at least some or all of the shades A1, A2, A3, B1, C2, and D2 or other suitable shade according to one of the VITA shade guides as available from the company VITA Zahnfabrik GmbH & Co. KG, Germany.

In a further embodiment the scanning device is integrated in a dental treatment unit. Such a dental treatment unit typically comprises a dental chair and a control unit for driving a dental burr. The dental treatment unit may further comprise a computer screen for visualizing any scan results from scanning a patient's teeth.

### Brief Description of the Figures

- Fig. 1: is a diagram illustrating a method and system according to an embodiment of the invention; and
- Fig. 2: is a diagram illustrating further details of the method and system according to an embodiment of the invention.

### Detailed Description of the Invention

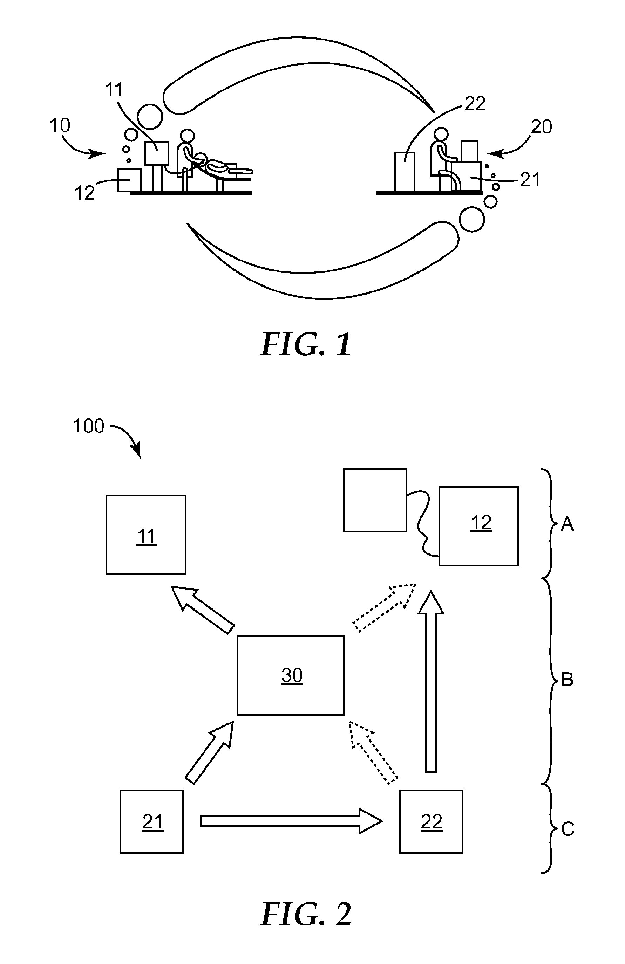

Fig. 1 shows a dentist's practice 10 and a dental lab 20. The dentist's practice 10 comprises a dental scanning device 11 for capturing the shape of a patient's teeth or a model of the patient's teeth. Further the dentist's practice 10 comprises a CNC device 12 for cutting a dental restoration from a blank. The scanning device 11 generally allows for optically capturing a three-dimensional shape of an object and for converting the captured shape in computer processible scan data. A dental scanning device as it may be used with the present invention is available under the designation Lava™ Chairside Oral Scanner C.O.S. from the company 3M Deutschland GmbH, Germany, or an alternative device as available under the designation 3M^{™} True Definition Scanner, from 3M Company, USA. Further the CNC device is generally adapted for machining a three-dimensional object automatically by computer-controlled movement of a cutting tool. Such a machine is typically controlled based on machine control data, sometimes further referred to as Computer Numerical Control (CNC) data. A CNC device as it may be used with the present invention is available under the designation CAM 4-K4 from the company vhf camfacture AG, Germany. In the example the scanning device 11 and the CNC device 12 each are connected to a telecommunication interface for data communication with an external data source. Further the scanning device 11 and the CNC device 12 are preferably not adapted for direct data communication with each other. The scanning device 11 and the CNC device 12 may on the one hand be connected to one network (for example the internet) but on the other hand nevertheless not be suitable for direct data communication with one another. For example the scanning device 11 may be adapted for providing the scan data in a data format that is incompatible with a data format suitable for the CNC device 12. And further the CNC device 12 may be adapted for operating based on a data format that is incompatible with the data format provided by scanning device 11. Accordingly the scanning device 11 and the CNC device 12 may not need to be directly compatible with one another with regard to the data format used the respective device. This allows the method of the invention to be performed at a dentist's practice independent from the actual scanning device and CNC device available at dentist's practice.

The dental lab 20 comprises a Computer Aided Design (CAD) device 21 and a data conversion unit 22. The CAD device is adapted for designing a dental restoration based on scan data (eventually appropriately converted into CAD data) captured by the dentist's practice. Further the conversion unit is adapted to convert a design obtained from the CAD device in machine control data. Although in the example the CAD device 21 and the data conversion unit 22 are illustrated as two separate units the skilled person will recognize the data conversion unit may be integrated in the CAD device. Thus a single device can be used for design and data conversion to provide machine control data.

Fig. 2 illustrates the operation of the method of the invention and a system 100 of the invention in more detail. A central processing unit 30 is located at a second location B remote from the first location A at which the dentist's practice is located. Further the dental lab 20 is located at a third location C remote from the first location A and remote from the second location B.

The scanning device 11 and the central processing unit 30 are connectable for a data communication with each other, and the central processing unit and the CAD device 21 are connectable for a data communication with each other, but the scanning device 11 and the CAD device 21 are not adapted for a direct data communication with each other. Further the conversion unit 22 and the CNC device 12 are in one embodiment connectable for a direct data communication with each other, whereas in another embodiment the conversion unit 22 and the central processing unit 30 are connectable for a data communication with each other, and the central processing unit 30 and the CNC device 12 are connectable for a data communication with each other. In the latter embodiment the conversion unit 22 and the CNC device 12 may not be adapted for a direct data communication with each other. The central processing unit 30 comprises case management software and is adapted for receiving data per upload from a remote data source and for transmitting data per download by a remote data source. Therefore the data communication to and from the central processing unit may be generally triggered from outside the processing unit. Thus the central processing unit may not need active functionality for initiating data communication with external sources, but may standby passively and receive and transmit data initiated only per external request. This helps in minimizing data traffic between the central processing unit and external data sources.

According to the method of the invention in one step scan data may be transmitted from the scanning device 11 to the central processing unit 30. The data transfer is preferably performed by upload from the scanning device 11 to a storage of the central processing unit 30. The central processing unit 30 is preferably adapted to store data at any data format which is suitable for storage. At this stage the compatibility of the data format with a particular scanning device or a particular CAD device is not required. Further the scan data in the form they are uploaded to the central processing unit 30 may not be compatible with CAD data required by the CAD device. Accordingly the central processing unit 30 is adapted to accept scan data at a variety of different data formats, for example as provided by different types of scanning devices. Accordingly there is no need to ensure a correct data format for a dentist using the scanning device 11 for uploading data. This is advantageous in that changes of the data format due to software updates in the scanning device or a change of the type of scanning device does not affect the data communication with the central processing unit 30.

The central processing unit 30 preferably has software to convert scan data uploaded in the central processing unit's storage to a desired CAD data format. Typically the central processing unit 30 is kept up to date for converting a variety of different formats of scan data, including for example out-dated data formats received from scanning devices which do not use up to date software. Further the central processing unit 30 preferably stores the converted scan data as first CAD data and makes the first CAD data available for download by a CAD device. The central processing unit may store the first CAD data redundantly at different data formats to make the first CAD data compatible with a variety of different CAD devices. As an advantage the predominant expertise about different data formats and software maintenance can be established only at the second location B at which the central processing unit 30 is operated, whereas users of scanning and CAD devices are relieved from the burden of meeting and maintaining particular data format requirements for communication with external locations.

In a further step the first CAD data may be downloaded to the dental CAD device 21. The central processing unit 30 may be adapted to inform one or more dental labs at the third location C about the first CAD data being available on the central processing unit 30. In the example an operator of the CAD device 21 may for example receive such information and download the first CAD data at the next convenience. In practice the information may be sent by email which comprises a link to the first CAD data, and using the link may cause the first CAD data to be automatically downloaded in the CAD device 21. The operator is preferably skilled in the design of dental restorations, for example may be a dental technician. The operator preferably designs a dental restoration based on the first CAD data (which for example contain the shape of at least part of a patient's dentition) and thus provides second CAD data (which preferably contain at least the shape of the dental restoration).

In a further step the second CAD data are converted into machine control data. This may be performed on the CAD device or by a separate conversion unit 22 to which the second CAD data are transmitted.

In still a further step the machine control data are directly or indirectly transmitted to the CNC device. As there are ISO standards for formats of machine control data a variety of different CAD devices or conversion units are adapted to provide machine control data according to such standards, and further there are a variety of different CNC devices which are adapted to operate based on such standardized machine control data formats. Accordingly the machine control data may be directly transmitted to the CNC device. However alternatively the machine control data are uploaded to the central processing unit 30 where the uploaded data are stored. Again the central processing unit 30 is preferably adapted to store such data at any data format which is suitable for storage. At this stage the compatibility of the data format with a particular CNC device or a particular CAD device or conversion unit is not required. The central processing unit 30 may have software for optionally converting the machine control data. Further the central processing unit 30 is preferably adapted to make the machine control data (or converted machine control data) available for download by the CNC device.

The CAD device 21, conversion unit 22 and/or the central processing unit 30 may be adapted to send information to the CNC device to indicate that machine control data are available for download. The CNC device is preferably adapted to do receive the machine control data per download and to indicate a successful download to a user. The user (for example a dentist or the dentist's assistant) may initiate the CNC device to start manufacturing the dental restoration based on the downloaded machine control data in response of an indication of the successful download. CAD data for preview or modification of the design of the dental restoration are preferably not required and not downloaded for manufacturing of the dental restoration.

In the system 100 the scanning device 11 and the CNC device 12 can operate independent from each other, although the machine control data processed by the CNC device is associated with the scan data obtained by the scanning device 11. Thus after scanning a patient's teeth the scanning device 11 is immediately available for scanning another patient's teeth, and for receipt of machine control data the scanning device is not needed and therefore not blocked. Further in the system 100 several patients' dental restorations may be manufactured subsequently without substantial breaks between manufacturing of the individual restorations. Therefore the system 100 allows for minimizing idle times (for example due to a busy device or treatment chair) and therefore help maximizing time and cost efficiency in a dentist's practice.

The CNC device 12 is preferably adapted to shape the dental restoration by cutting with a geometrically determined cutting edge (further referred to as cutting). Accordingly a blank, preferably having at least a polymeric material component, may be milled by the CNC device. Such a blank is for example available under the designation LAVA^{™} Ultimate from the company 3M Deutschland GmbH. Due to the polymeric material component the blank can be easily and quickly milled on the CNC device 12. Further the cutting process is preferably performed without the use of a cooling liquid. Therefore the manufacturing of the dental restoration is facilitated and may be performed at a minimized time.

## Claims

1. A method of making a dental restoration, comprising the steps of:
(a) transmitting from a scanning device at a first location scan data representing at least part of a patient's dentition to a central processing unit located at a second location which is remote from the first location;
(b) receiving on a Computer Numerical Control (CNC) device at the first location machine control data for manufacturing a dental restoration from the central processing unit or from a third location which is remote from the first location and the second location, wherein the machine control data is associated with the scan data and in a format suitable for processing by the CNC device;
(c) providing a dental blank; and
(d) shaping the dental blank based on the machine control data, and thereby providing the dental restoration.

2. The method of claim 1, wherein the steps (a) to (d) are performed within a time period of less than eight hours, preferably less than one hour.

3. The method of any of the preceding claims, wherein the dental restoration is made of a single piece from a single blank.

4. The method of any of the preceding claims, wherein the step (d) is performed essentially without liquid cooling and essentially without grinding.

5. The method of any of the preceding claims, further comprising the steps of:
- indicating receipt of machine control data to a user at the first location; and
- initiating the shaping of the dental blank upon user input.

6. The method of any of the preceding claims, further comprising the step of converting the scan data into first Computer Aided Design (CAD) data at the second location and transmitting the first CAD data to the third location.

7. The method of claim 6, further comprising the steps of:
- receiving the first CAD data at the third location, wherein the third location comprises a dental Computer Aided Design (CAD) device and operator based design capability; and
- designing at the third location the dental restoration based on the first CAD data and thereby providing second CAD data.

8. The method of claim 7, further comprising the steps of:
- alternatively:
o converting the second CAD data into machine control data at the third location and transmitting the machine control data to the second location, or
o transmitting the second CAD data to the second location and converting the second CAD data into machine control data at the second location; and
- transmitting the machine control data to the first location.

9. The method of claim 8, comprising the steps of:
- uploading the scan data to a case manager at the second location;
- downloading the first CAD data by the CAD device at the third location;
- optionally uploading the second CAD data to the case manager at the second location;
- downloading the machine control data by CNC device at the first location.

10. The method of any of the preceding claims, wherein the scan data is directly transmitted from the scanning device at the first location to the central processing unit, and wherein the machine control data is directly received by the CNC device from the third location.

11. A system for making a dental restoration comprising:
- at a first location a scanning device, which is configured for transmitting scan data to a central processing unit located at a second location which is remote from the first location;
- at the first location a Computer Numeric Control (CNC) device which is configured for receiving machine control data from the central processing unit or from a third location which is located remote from the first location and the second location;
- wherein the CNC device is adapted to buffer and to indicate receipt of the machine control data; and
- wherein the CNC device is adapted to shape a dental blank based on the machine control data, and thereby providing the dental restoration.

12. The system of claim 11, wherein the scanning device and the CNC device are not adapted for direct data communication with each other.

13. The system of claim 11 or 12, wherein the CNC device is adapted to initiate shaping of the dental blank after receipt of machine control data upon user input.

14. The system of any of claims 11 to 13, further comprising one or a plurality of dental blanks for making one or more dental restorations.

15. The system of any of claims 11 to 14, wherein the scanning device is integrated in a dental treatment unit which comprises a dental chair and a control unit for driving a dental burr.
